# EUROPEAN PATENT APPLICATION

(11) **EP 4 633 177 A2**
(43) Date of publication of application: **15.10.2025**
(21) Application number: 25199590.8
(22) Date of filing: 13.06.2019
(51) Int. Cl.: H04N 23/00

(54) **PROBE MOTION COMPENSATION**

(30) Priority: 14.06.2018 US 201816008475
(62) Divisional of application: 19735026.7
(71) Applicant: General Electric Company, Cincinnati, Ohio 45215 (US)
(72) Inventor: DIWINSKY, David Scott, Cincinnati, 45215 (US); ROBERTS, Herbert Chidsey, Cincinnati, 45215 (US); RASCH, Lyle Timothy, Cincinnati, 45215 (US); FULLINGTON, Michael Dean, Cincinnati, 45215 (US); GRADY, Wayne Ray, Cincinnati, 45215 (US); GRAHAM, Andrew Crispin, Bristol, BS34 7JU (GB)
(74) Representative: Openshaw & Co.

(57) **Abstract**

A system for compensating for a relative motion between a probe and an apparatus. The system includes a probe assembly, a sensor, and a computer. The probe assembly includes an actuator pack positioned exterior to the apparatus and a probe insertable into the apparatus. The probe includes a first end coupled to the actuator pack, a second end, and an elongated body extending therebetween. The sensor senses data indicative of a relative motion between the apparatus and the probe assembly. The computer is operably coupled with the sensor and the probe assembly to move the probe of the probe assembly in response to the sensor sensing the data indicative of the relative motion between the apparatus and the probe assembly.

## Description

### FIELD OF TECHNOLOGY

The present subject matter relates generally to a system for compensating for the relative motion between a probe and an apparatus, such as the relative motion between the probe and a gas turbine engine.

### BACKGROUND

Probes are used as an inspection tool to view inside an apparatus such as a turbomachine or engine. Optical scopes, such as borescopes, include a removable optical adapter tip at an end of the optical scope. The optical adapter is generally suited for various purposes, such as providing a discrete direction of view. The optical scope, including the optical adapter, is ingressed into the apparatus for viewing and assessing internal components. Other probes, such as repair probes, include tools at the end of the probe for maintaining the apparatus.

In order to allow for periodic inspection of internal parts of a gas turbine engine (e.g., blades, vanes, shrouds, disks, frames, etc.), borescope ports are typically provided in the engine casings and/or frames. Such ports allow probe instruments to be inserted into the core engine to enable a visual inspection of the engine and/or maintenance to be performed without requiring disassembly of the engine components. Often, an actuator pack is positioned external to the engine for manipulating the probe through the borescope ports.

Many situations require performing engine inspection or maintenance while the engine is on-wing, or in-situ. In certain situations, the wing and/or engine may move due to shifting weight, wind, cooling components, etc. The movement of engine during an inspection or repair may be problematic. For example, such movement of the engine and/or probe may be problematic for inspection or maintenance that requires a high degree of precision.

Accordingly, a system and method to more effectively inspect and/or repair an apparatus despite this movement would be useful.

### BRIEF DESCRIPTION

Aspects and advantages will be set forth in part in the following description, or may be obvious from the description, or may be learned through practice of the invention.

In one aspect, the present disclosure is directed to a system for compensating for a relative motion between a probe and an apparatus. The system includes a probe assembly, a sensor, and a computer. The probe assembly includes an actuator pack positioned exterior to the apparatus and a probe insertable into the apparatus. The probe includes a first end coupled to the actuator pack, a second end, and an elongated body extending therebetween. The sensor senses data indicative of a relative motion between the apparatus and the probe assembly. The computer is operably coupled with the sensor and the probe assembly to move the probe of the probe assembly in response to the sensor sensing the data indicative of the relative motion between the apparatus and the probe assembly.

In one embodiment, the apparatus may include a surface. In one such embodiment, the sensor may be a linear variable differential transformer operable with the surface of the apparatus. In another such embodiment, the sensor may be an optical sensor operable with the surface of the apparatus. In such an embodiment, the optical sensor may include an optical receiver and an optical transmitter. Further, one of the optical receiver or the optical transmitter may be coupled to the surface of the apparatus. In another embodiment, the sensor may be an accelerometer.

In another embodiment, the actuator pack may further include a translational motor configured to change an orientation of the actuator pack relative to the apparatus in response to the sensor sensing the data indicative of the relative motion. In a further embodiment, the apparatus may be a gas turbine engine. In a still further embodiment, the probe may be a snake probe, and the elongated body of the snake probe may include a plurality of segments moveable relative to one another by the actuator pack. It should be further understood that the system may further include any of the additional features as described herein.

In another aspect, the present disclosure is directed to a method of compensating for a relative motion between a probe of a probe assembly and an apparatus. The probe assembly further includes an actuator pack. The method includes inserting the probe into an apparatus. The method further includes sensing data indicative of a relative motion between the apparatus and at least one of the probe or an actuator pack using a sensor. In another step, the method includes moving the probe relative to the apparatus in response to the sensed data indicative of the relative motion between the apparatus and at least one of the probe or the actuator pack.

In one embodiment of the method, the apparatus may be a gas turbine engine. In one such embodiment, inserting the probe into the apparatus may include repairing a component of the gas turbine engine in situ. In another embodiment, moving the probe relative to the apparatus may include moving the probe relative to the apparatus using a translational motor to move the actuator pack. In a further embodiment, sensing data indicative of the relative motion between the apparatus and at least one of the probe or the actuator pack may include sensing data indicative of an actual vibration of the probe. In an additional embodiment, moving the probe relative to the apparatus may include applying a contra-acting vibration to the second end of the probe to reduce the actual vibration of the probe.

In one embodiment, sensing data indicative of the relative motion between the apparatus and at least one of the probe or the actuator pack using the sensor may include sensing data indicative of a displacement of a linear variable differential transformer. In another embodiment, sensing data indicative of the relative motion between the apparatus and at least one of the probe or the actuator pack may include sensing data indicative of a change in an alignment of an optical transmitter of an optical sensor and an optical receiver of the optical sensor. It should be further understood that the method may further include any of the additional features as described herein.

In yet another aspect, the present disclosure is directed toward a system for compensating for a relative motion between a probe and an apparatus. The system includes a probe assembly, a sensor, and a computer. The probe assembly includes an actuator pack positioned exterior to the apparatus and a probe insertable into the apparatus. Further, the probe includes a first end coupled to the actuator pack, a second end having a tool, and an elongated body extending therebetween. The sensor is configured to sense data indicative of a working motion of the probe assembly as a result of an operation of the tool. The computer is operable with the probe assembly and the sensor. Further, the computer is configured to move the probe of the probe assembly in response to the sensor sensing the data indicative of the working motion of the probe assembly.

In one embodiment the tool may be an oscillation tool. In a further embodiment, the sensor may be attached at the second end of the probe. Further, the working motion of the probe assembly may be an actual vibration of the probe assembly relative to the apparatus. In another embodiment, the system may further include a damping device configured to apply a contra-acting vibration to the second end of the probe to reduce the actual vibration of the probe. It should be further understood that the system may further include any of the additional features as described herein.

These and other features, aspects and advantages will become better understood with reference to the following description and appended claims. The accompanying drawings, which are incorporated in and constitute a part of this specification, illustrate embodiments of the invention and, together with the description, serve to explain certain principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended Figs., in which:
FIG. 1 illustrates a cross-sectional view of one embodiment of a gas turbine engine according to the present disclosure;
FIG. 2 illustrates a cross-sectional view of one embodiment of a system for compensating for the relative motion between a probe and an apparatus according to the present disclosure, particularly illustrating the probe inserted through an access port of the apparatus;
FIG. 3 illustrates a cross-sectional view of another embodiment of the system for compensating for the relative motion between the probe and the apparatus according to the present disclosure, particularly illustrating a snake probe;
FIG. 4 illustrates a front view of a further embodiment of the system for compensating for the relative motion between the probe and the apparatus according to the present disclosure, particularly illustrating the probe inserted into a gas turbine engine in-situ;
FIG. 5 illustrates a cross-sectional view of a still further embodiment of the system for compensating for the relative motion between the probe and the apparatus according to the present disclosure, particularly illustrating a solenoid included in the probe; and
FIG. 6 depicts one embodiment of a method for compensating for the relative motion between the probe and the apparatus according to the present disclosure.

Repeat use of reference characters in the present specification and drawings is intended to represent the same or analogous features or elements of the present invention.

### DETAILED DESCRIPTION OF PARTICULAR EMBODIMENTS

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first", "second", and "third" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "coupled," "fixed," "attached to," and the like refer to both direct coupling, fixing, or attaching, as well as indirect coupling, fixing, or attaching through one or more intermediate components or features, unless otherwise specified herein.

The terms "communicate," "communicating," "communicative," and the like refer to both direct communication as well as indirect communication such as through a memory system or another intermediary system.

It should be appreciated that, although the present subject matter will generally be described herein with reference to optical probes and repair probes inserted within a gas turbine engine, the disclosed system and method may be generally used to insert any probe within a gas turbine engine and compensate for motion therebetween. For instance, the probe may be an inspection probe, a range finder, a laser rangefinder, a proximity sensing probe, a LIDAR probe, and/or a RADAR probe.

It should also be appreciated that the disclosed system and method may generally be used with any suitable type of turbine engine, including aircraft-based turbine engines, land-based turbine engines, and/or steam turbine engines, regardless of the current assembly state of the engine (e.g., fully or partially assembled). Additionally, with reference to aircraft engines, it should be appreciated that the present subject matter may be used on-wing or off-wing.

Furthermore, it should be appreciated that, although the present subject matter will generally be described herein with reference to a gas turbine engine, the disclosed system and method may be generally used with any probe within any type of apparatus. For example, the system and method may generally be used on any apparatus with internal structure that is difficult to access and/or inspect. In certain other embodiments, the probe may be inserted within any apparatus such as a mechanical or organic body with cavities, orifices, tubes, etc. for the examination thereof. Further, in other embodiments, the probe may be used for medical purposes, such as insertion into an orifice of a human or an animal.

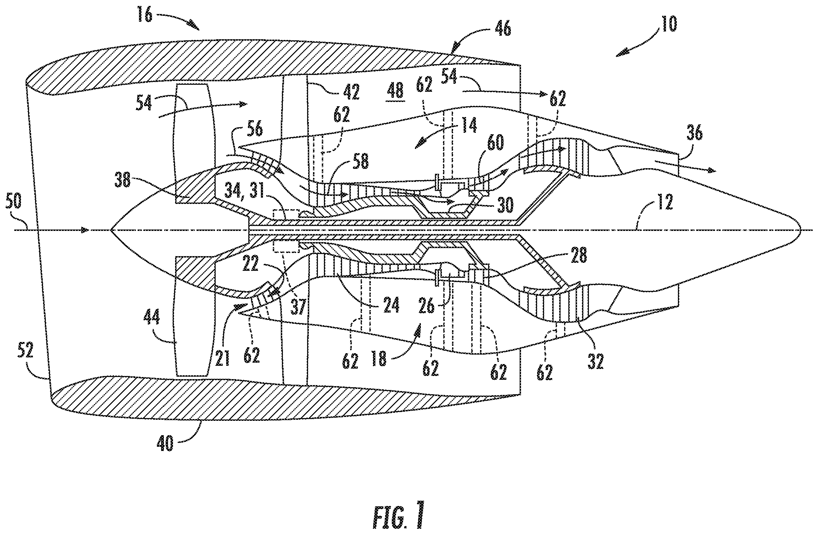

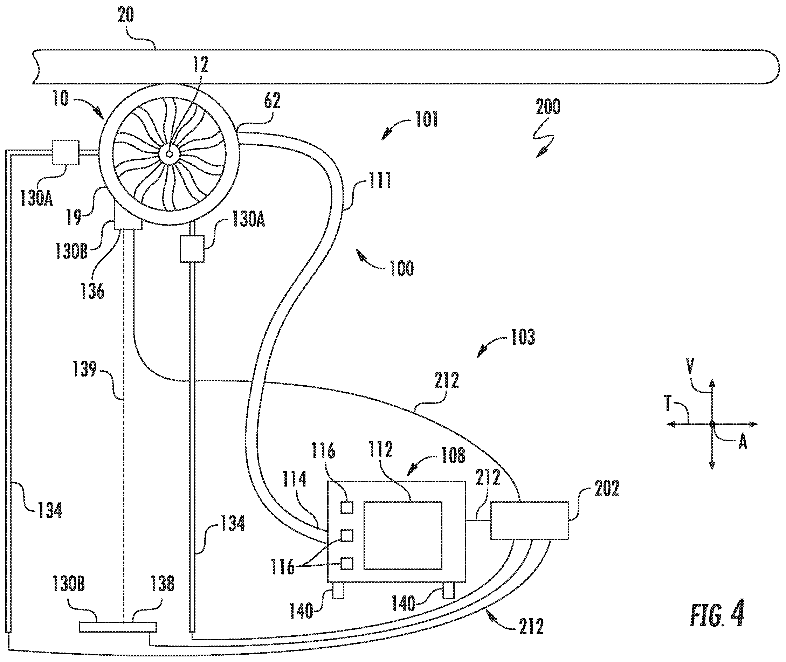

Referring now to the drawings, FIG. 1 illustrates a cross-sectional view of one embodiment of an apparatus 10 that a system 200 (see, e.g., FIG. 4) may be utilized in. The apparatus 10 is shown having a longitudinal or axial centerline axis 12 extending therethrough for reference purposes. In the depicted embodiment, the apparatus 10 is a gas turbine engine. It should be recognized that, in other embodiments, the apparatus 10 may be any other mechanical or organic body with cavities, orifices, tubes, etc. for the examination thereof.

In general, the gas turbine engine may include a core gas turbine engine (indicated generally by reference character 14) and a fan section 16 positioned upstream thereof. The core engine 14 may generally include a substantially tubular outer casing 18 that defines an annular inlet 21. In addition, the outer casing 18 may further enclose and support a booster compressor 22 for increasing the pressure of the air that enters the core engine 14 to a first pressure level. A high pressure, multistage, axial-flow compressor 24 may then receive the pressurized air from the booster compressor 22 and further increase the pressure of such air. The pressurized air exiting the high pressure compressor 24 may then flow to a combustor 26 within which fuel is injected into the flow of pressurized air, with the resulting mixture being combusted within the combustor 26. For the illustrated embodiment, the high energy combustion products 60 are directed from the combustor 26 along the hot gas path of the gas turbine engine to a first (high pressure) turbine 28 for driving the high pressure compressor 24 via a first (high pressure) drive shaft 30, and then to a second (low pressure) turbine 32 for driving the booster compressor 22 and fan section 16 via a second (low pressure) drive shaft 34 that is generally coaxial with first drive shaft 30. In the exemplary embodiment, after driving each of turbines 28 and 32, the combustion products 60 may be expelled from the core engine 14 via an exhaust nozzle 36 to provide propulsive jet thrust.

Additionally, as shown in FIG. 1, the fan section 16 of the gas turbine engine may generally include a rotatable, axial-flow fan rotor assembly 38 that is configured to be surrounded by an annular fan casing 40. It should be appreciated by those of ordinary skill in the art that the fan casing 40 may be configured to be supported relative to the core engine 14 by a plurality of substantially radially-extending, circumferentially-spaced outlet guide vanes 42. As such, the fan casing 40 may enclose the fan rotor assembly 38 and its corresponding fan rotor blades 44. Moreover, a downstream section 46 of the fan casing 40 may extend over an outer portion of the core engine 14 so as to define a secondary, or by-pass, airflow conduit 48 that provides additional propulsive jet thrust.

It should be appreciated that, in several embodiments, the second (low pressure) drive shaft 34 may be directly coupled to the fan rotor assembly 38 to provide a direct-drive configuration. Alternatively, the second drive shaft 34 may be coupled to the fan rotor assembly 38 via a speed reduction device 37 (e.g., a reduction gear or gearbox) to provide an indirect-drive or geared drive configuration. Such a speed reduction device(s) 37 may also be provided between any other suitable shafts and/or spools within the gas turbine engine as desired or required.

During operation of the gas turbine engine, it should be appreciated that an initial airflow (indicated by arrow 50) may enter the gas turbine engine through an associated inlet 52 of the fan casing 40. For the embodiment shown, the airflow 50 then passes through the fan rotor blades 44 and splits into a first compressed airflow (indicated by arrow 54) that moves through conduit 48 and a second compressed airflow (indicated by arrow 56) which enters the booster compressor 22. In the illustrated embodiment, the pressure of the second compressed airflow 56 is then increased and enters the high pressure compressor 24 (as indicated by arrow 58). After mixing with fuel and being combusted within the combustor 26, the combustion products 60 may exit the combustor 26 and flow through the first turbine 28. Thereafter, for the exemplary embodiment, the combustion products 60 flow through the low pressure turbine 32 and exit the exhaust nozzle 36 to provide thrust for the gas turbine engine.

The apparatus 10 may also include a plurality of access ports 62 defined through its casings and/or frames for providing access to the interior of the apparatus 10, such as the core engine 14. For instance, as shown in FIG. 1, the gas turbine engine may include a plurality of access ports 62 (only eight of which are shown) defined through the outer casing 18 for providing internal access to one or both of the compressors 22, 24; for providing internal access to one or both of the turbines 28, 32; and/or for providing internal access to the combustor 26. In several embodiments, the access ports 62 may be spaced apart axially along the core engine 14. For instance, the access ports 62 may be spaced apart axially along each compressor 22, 24 and/or each turbine 28, 32 such that at least one access port 62 is located at each compressor stage and/or each turbine stage for providing access to the internal components located at such stage(s). In addition, the access ports 62 may also be spaced apart circumferentially around the core engine 14. For instance, a plurality of access ports 62 may be spaced apart circumferentially around each compressor stage and/or turbine stage.

It should be appreciated that, although the access ports 62 have been generally described herein with reference to providing internal access to one or both of the compressors 22, 24; to providing internal access to one or both of the turbines 28, 32; and/or to providing internal access to the combustor 26, the gas turbine engine may include access ports 62 providing access to any suitable internal location of the gas turbine engine.

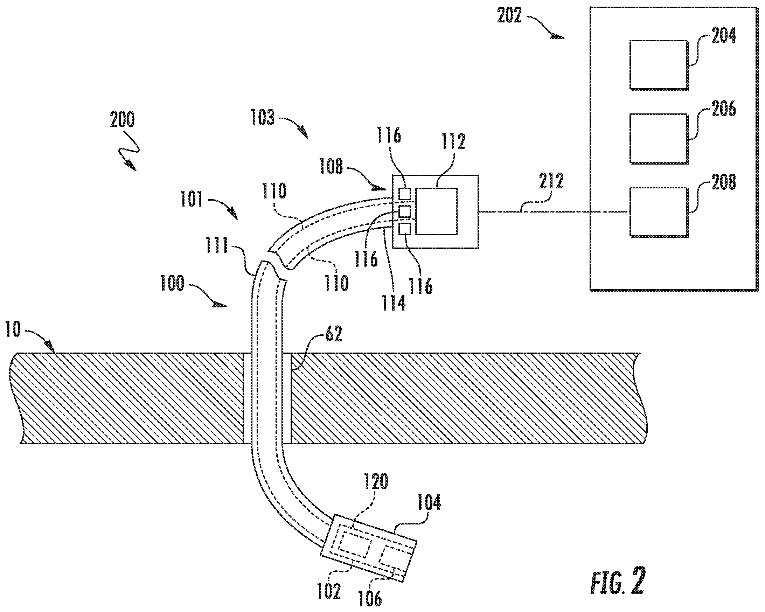

Referring now to FIG. 2, one embodiment of a system 200 for compensating for a relative motion between a probe 100 and the apparatus 10 is illustrated according to aspects of the present disclosure. For the embodiment depicted, the system 200 includes a probe assembly 103 including an actuator pack 108 and the probe 100. In the illustrated embodiment, the probe 100 is insertable into the apparatus 10, such as through any of the access ports 62 of the apparatus 10 as described above with reference to FIG. 1.

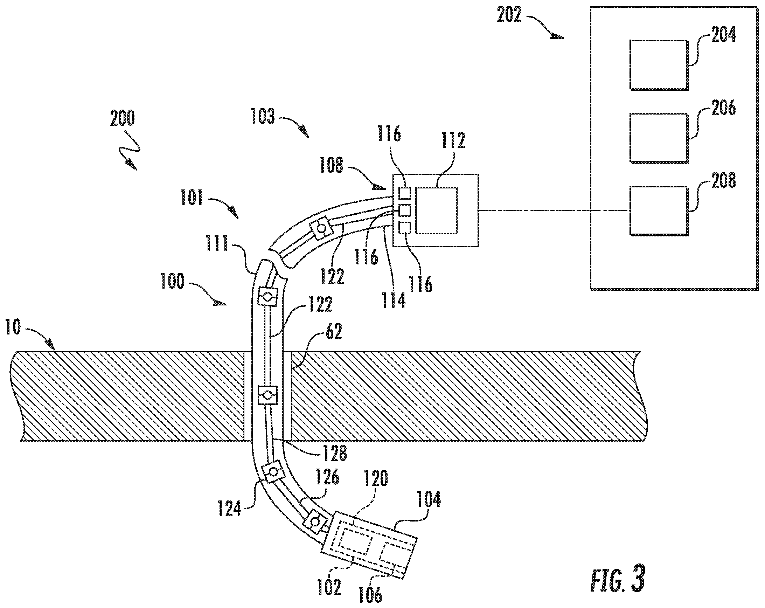

For the illustrated embodiment, the probe 100 includes a first end 114 coupled to an actuator pack 108, a second end 104, an elongated body 101 extending between the first end 114 and the second end 104, and a sensor 120. In the illustrated embodiment, the sensor 120 is positioned at the second end 104 of the probe 100. Further, for the embodiment depicted, the elongated body 101 may include a cable 111. However, in other embodiments, the elongated body 101 may include any other suitable structure (see, e.g., FIG. 3).

The system 200 additionally includes a computer 202. The computer 202 is operably coupled to the actuator pack 108 and the sensor 120 through a communicative cable or link 212. For example, the sensor 120 may produce a signal that is communicated through the cable 111 and to the computer 202 via the communicative cable 212. In the shown embodiment, the computer 202 is configured to orient and feed the probe 100 while it is inserted into the apparatus 10. For example, the computer 202 may send signals via the communicative cable 212 to the probe 100 to change the orientation of the probe 100. It should be recognized that, in other embodiments, the signals communicated to and from the computer 202 and probe 100 may be communicated wirelessly.

As is depicted schematically, the computer 202 generally includes at least one processor 204 and memory 206. Notably, although the computer 202 is depicted as being positioned physically separate from the probe assembly 103 and/or the actuator pack 108, in other embodiments, the computer 202 may be positioned in, or otherwise integrated into, the probe assembly 103, the actuator pack 108, or both. Additionally, or alternatively, the computer 202 may be integrated into, and/or operable with, any other suitable system.

The computer 202 generally includes a network interface 208. The network interface 208 may be operable with any suitable wired or wireless communications network for communicating data with other components of, e.g., the probe assembly 103, various sensors (such as the sensor 120 or a sensor 130, see, e.g., FIG. 4), and/or other components or systems not depicted. As depicted using phantom lines in FIG. 2, for the embodiment depicted, the network interface 208 may utilize the communicative cable or link 212 to communicate data with other components. Specifically, for the embodiment shown, through the network interface 208 of the computer 202 and the communicative cable or link 212, the computer 202 may be operably coupled to the actuator pack 108 of the probe assembly 103. In such a manner, the computer 202 may control operation of the probe assembly 103 as will be described in more detail below in regards to FIGS. 2-5.

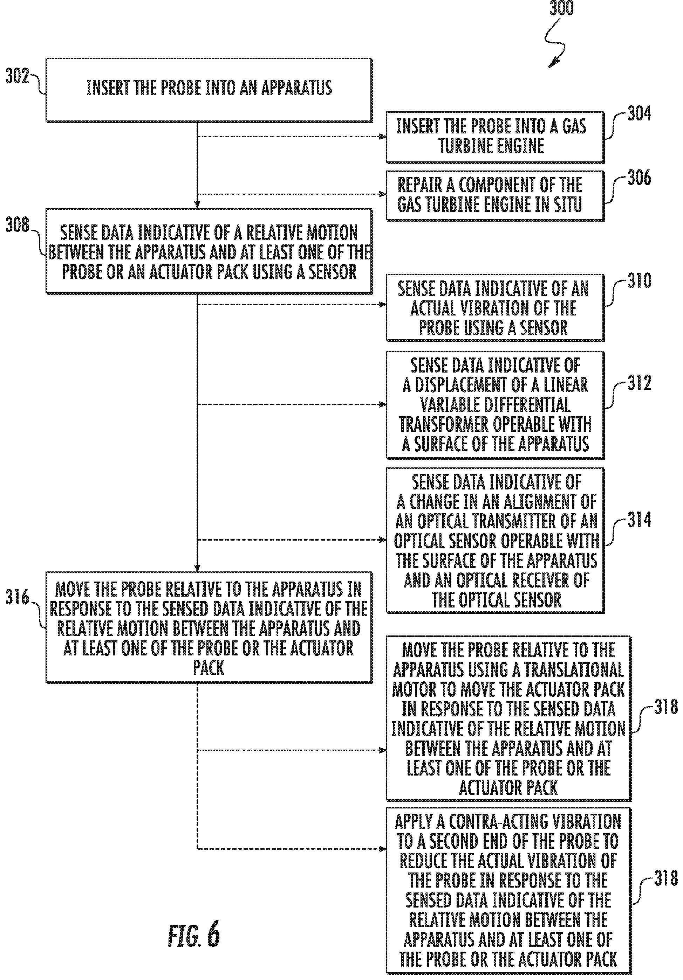

Referring still to FIG. 2, the computer 202 further includes one or more processors 204 and memory 206. The memory 206 stores data 210 accessible by the one or more processors 204. The one or more processor(s) 204 can include any suitable processing device, such as a microprocessor, microcontroller, integrated circuit, logic device, and/or other suitable processing device. The one or more memory device(s) 206 can include one or more computer-readable media, including, but not limited to, non-transitory computer-readable media, RAM, ROM, hard drives, flash drives, and/or other memory devices. The data 210 may include instructions that when executed by the one or more processors 204 cause the system 200 to perform functions. One or more exemplary aspects of these functions may be described below with respect to the exemplary method 300 of FIG. 6. The instructions within the data 210 can be any set of instructions that when executed by the one or more processor(s) 204, cause the one or more processor(s) 204 to perform operations. In certain exemplary embodiments, the instructions within the data 210 can be software written in any suitable programming language or can be implemented in hardware. Additionally, and/or alternatively, the instructions can be executed in logically and/or virtually separate threads on processor(s) 204. The memory device(s) 206 can further store other data 210 that can be accessed by the processor(s) 204.

In general, the probe 100 may correspond to any suitable probe configured to be inserted within the apparatus 10 via an access port 62. For example, as shown in the illustrated embodiment, the probe 100 may be configured as an optical probe. In such an embodiment, the optical probe 100 may be configured as any suitable optical device that may be inserted through an access port 62 of the apparatus 10 to allow images of the interior of the apparatus 10 to be captured or otherwise obtained. For instance, in several embodiments, the optical probe may correspond to a borescope, videoscope, fiberscope, or any other similar optical device known in the art that allows for the interior of an apparatus 10 to be viewed through an access port 62. In other embodiments, the probe 100 may be a repair probe, a range finder, a laser rangefinder, a proximity probe, a LIDAR probe, a RADAR probe, or any other suitable probe for insertion into the internal structure of an apparatus 10.

In the depicted embodiment, a probe housing 102 may include one or more optical elements, such as one or more optical lenses, optical fibers, image capture devices (e.g., video cameras, still-image cameras, CCD devices, CMOS devices), cables, and/or the like, for obtaining views or images of the interior of the apparatus 10 at the second end 104 of the probe 100 and for transmitting or relaying such images from the second end 104 along the elongated body 101 of the probe 100 to the exterior of the apparatus 10. As such, the probe housing 102 may include the sensor 120, such as the optical sensor. For instance, the interior views or images obtained by the probe 100 may be transmitted from second end 104 to the computer 202 connected or otherwise coupled to the probe 100 via communicative cable 212. Additionally, a light source 106, such as an LED, may be provided at or adjacent to the second end 104 to provide lighting within the interior of the apparatus 10.

In one embodiment, the probe 100 may include a plurality of sensors 120 (not shown). As such, for the illustrated embodiment, a signal from the sensor(s) 120 may be communicated to the computer 202 and may be used by the computer 202 to determine a real-time location of the probe 100 and/or for inspection purposes. For example, in one embodiment, the probe 100 may additionally include a proximity sensor. Proximity sensors may include, generally, sensors able to detect the presence of nearby objects without physically contacting the object. In one instance, a proximity sensor may emit and/or retrieve electromagnetic signals and process changes in said electromagnetic signals. Further, proximity sensors may include, but are not limited to, capacitive, infrared, inductive, magnetic, sonic or ultrasonic proximity sensors, LIDAR, RADAR, or laser rangefinders.

As stated, for the depicted embodiment, the system 200 includes the actuator pack 108 coupled to the first end 114 of the probe 100. The actuator pack 108 may be positioned exterior to the apparatus 10. In certain embodiments, the actuator pack 108 may be too heavy to attach directly to the apparatus 10, such as at the access port 62. In such situations, the actuator pack 108 may be placed on the ground near the apparatus 10, or, e.g., on a stand. For example, the actuator pack 108 may be placed below the gas turbine engine while the gas turbine engine is still attached to the aircraft.

The actuator pack 108 may move the probe 100 in response to, e.g., a user input or a command from the computer 202. For example, the actuator pack 108 may change the position and/or orientation of the probe 100, such as the cable 111 and/or the second end 104. Further, the actuator pack 108 may allow for the second end 104 to be rotated or pivoted about a single axis or multiple axes to adjust the orientation of the second end 104 relative to the remainder of the probe 100. The actuator pack 108 may also manipulate the length of the cable 111 to change its position and/or orientation. It should be appreciated that the actuator pack 108 may generally have any suitable configuration and/or may include any suitable components that allows for adjustment of the orientation of the cable 111 and/or the second end 104 relative to the remainder of the probe 100. For example, in one embodiment, the actuator pack 108 may include one or more probe actuators 116 coupled to articulation cables 110. In such an embodiment, by adjusting a tension of the articulation cables 110 via the probe actuator(s) 116, the probe 100 and/or the second end 104 may be reoriented within the apparatus 10. Further, the actuator pack 108 may include at least one translational motor 112 (as discussed in more detail in regards to FIG. 4) that changes the position of the actuator pack 108 relative to the apparatus 10.

It should also be appreciated that, in several embodiments, the actuator pack 108 may be configured to be electronically controlled. As shown, the computer 202 may be communicatively coupled to the actuator pack 108 to allow the computer 202 to adjust the orientation of the probe 100 and/or the second end 104 via control of the actuator pack 108. For instance, in the illustrated embodiment, the computer 202 may be configured to transmit suitable control signals to the probe actuator(s) 116 in order to adjust the tension within the associated articulation cable(s) 110, thereby allowing the computer 202 to automatically adjust the orientation of the probe 100 and/or the second end 104 within the apparatus 10. Further, the computer 202 may be communicatively coupled to the translational motor(s) 112 to allow the computer 202 to change the position of the actuator pack 108.

Referring now to FIG. 3, one embodiment of a system 200 in accordance with the present disclosure is depicted. The system 200 may be configured in substantially the same manner as the exemplary system 200 described above with respect to FIG. 2. For example, the system 200 includes the probe 100, the computer 202, the actuator pack 108, the actuator(s) 116, and the articulation cables 110 (omitted for clarity). However, for the embodiment of FIG. 3, the probe of the system 200 may be a snake probe. For the depicted embodiment, the elongated body 101 of the snake probe includes a plurality of segments 122 moveable relative to one another by the actuator pack 108. Each of the segments 122 may at least partially define the elongated body 101 of the snake probe. For example, the elongated body 101 may be defined by the summation of the segments 122 and any other components positioned between the segments 122. Further, the cable 111 may house the segments 122. It should be recognized that the segments 122 may provide rigidity to the cable 111 and therefore may selectably fix the probe 100 in a desired orientation and/or shape. However, in other embodiments, the probe 100 may not include the outer structure of the cable 111 and instead may be formed completely by the plurality of segments 122.

In the depicted embodiment, the snake probe includes one or more joints 124 positioned between the linear segments 122. The actuator(s) 116 may be coupled to the linear segments 122 at the joint(s) 124, such as via the articulation cables 110, to change the position and/or orientation of the probe 100. For example, the actuator(s) 116 may change the position and/or orientation of a first segment 126 relative to a second segment 128. As such, the position and/or orientation of the segments 122 may be changed in order to manipulate the shape of the probe 100 and direct the probe 100 and/or the second end 104 to a desired location and orientation within the apparatus 10. It should be recognized that the actuator(s) 116 may be any capable actuator.

Briefly, it will be appreciated that the snake probe may define certain parameters to further enable it to reach relatively remote positions within the interior of the apparatus 10. More specifically, for the embodiment shown, the snake probe may define a length between the first end 114 in the second end 104 of least about thirty-six (36) inches, such as at least about forty-eight (48) inches, such as at least about sixty (60) inches, such as up to about 600 inches. Similarly, the snake probe may define a maximum diameter between the first end 114 and the second end 104, which for the embodiment depicted may be a maximum diameter of each of the individual segments 122 of the snake probe, less than about five (5) inches. For example, the maximum diameter of the snake probe may be less than about three (3) inches, such as less than about 2.5 inches, such as less than about one (1) inch. Such may further allow the snake probe to reach the relatively remote locations within the interior of the apparatus 10.

Referring now to FIG. 4, one embodiment of a system 200 in accordance with the present disclosure is depicted. The system 200 may be configured in substantially the same manner as the exemplary system 200 described above with respect to FIG. 2 and/or FIG. 3. For example, the system 200 includes the probe 100, the computer 202, and the actuator pack 108. For the depicted embodiment, the apparatus 10 is a gas turbine engine still in situ on a wing 20 of an aircraft. Generally, a gas turbine engine positioned on-wing of an aircraft may be referred to as in situ. For example, the probe 100 may be inserted in the apparatus 10 for repairing and/or examining a component of the apparatus 10. As illustrated, the probe 100 has been inserted into the apparatus 10, such as via the access port 62 of the apparatus 10. It should be recognized that the probe 100 may be inserted in any other access port 62 of the apparatus 10, such as any of those described in FIG. 1. In other embodiment, the probe 100 may be inserted into the gas turbine engine off-wing, fully assembled, and/or partially disassembled. Further, the probe 100 may be inserted in any other type of apparatus 10.

The system 200 includes a sensor 130 configured to sense data indicative of the relative motion between the apparatus 10 and the probe assembly 103. For example, the sensor 130 may be able to sense data indicative of the relative motion between the apparatus 10 and at least one of the probe 100 or the actuator pack 108. In certain embodiments, the sensor 130 may sense data indicative of the relative motion between the apparatus 10 and the ground. For example, the actuator pack 108 may be permanently or temporarily fixed to the ground such that a displacement of the apparatus 10 relative to the ground is substantially the same as a displacement of the apparatus 10 relative to the actuator pack 108. In other embodiment, one or more sensors 130 may track both the motion of the apparatus 10 relative to the ground and the motion of the actuator pack 108 relative to the ground. As such, the vectors of these two motions may be compared to determine the relative motion between the apparatus 10 and the actuator pack 108.

The system 200 also includes a computer 202, configured as a controller, operably coupled to the sensor 130, the probe assembly 103 (such as the actuator pack 108), or both. For example, the sensor 130 may be linked to the actuator pack 108 via the computer 202 using a communicative cable 212. In other embodiments, the sensor 130 may be in wireless communication with the computer 202 and thus the actuator pack 108. For the exemplary embodiment, the sensor 130 is coupled to at least one of the actuator pack 108 or the apparatus 10. For example, the sensor 130 may be attached to a surface 19 of the apparatus 10. As shown in the illustrated embodiment, the system 200 may include a plurality of sensors 130.

The sensor(s) 130 may track a relative motion between the apparatus 10 and the actuator pack 108. For example, wind, shifting weight, cooling parts, or other external forces may cause the wing 20 and/or the apparatus 10 to move. Generally, the actuator pack 108 located external to the apparatus 10 will not move with the apparatus 10. Such motion of the apparatus 10 may create difficulties in using the probe 100 to inspect or repair the apparatus 10. As such, the sensor(s) 130 may sense this relative motion between the apparatus 10 and the actuator pack 108. Further, the sensor(s) 130 may communicate a signal representing this relative motion. In certain embodiments, the signal may be communicated to the computer 202. For instance, the computer 202 may store the relative motion in order to determine a change in the position and/or orientation of the probe 100 within the apparatus 10.

More specifically, for the embodiment depicted, the sensor 130 includes a first sensor 130A and a second sensor 130B. As shown in the exemplary embodiment, the sensor(s) 130A may be a linear variable differential transformer (LVDT). Generally, an LVDT is a type of transformer that may be used to measure linear displacement. For example, in one embodiment, the LVDT may include three solenoid coils positioned end-to-end within a housing. A magnetic core may be positioned within the coils and may be moved axially through the solenoids. The magnetic core may be coupled to an object where a displacement measurement is desired. As the object is displaced, and therefore the magnetic core, a voltage change may be induced in the LVDT. The change in voltage in the LVDT may be the signal communicated to the computer 202 or the actuator pack 108. Further, this change in voltage may be correlated to the displacement of the object. It should be recognized that, in certain embodiments, the LVDT may only be able to sense displacements in one direction, such as the axial direction through the housing.

As illustrated in the embodiment of FIG. 4, the LVDT may be operable with the surface 19 of the apparatus 10. For example, the LVDT may be coupled to, or contact, the surface 19 at the exterior of the apparatus 10. For instance, the LVDT may contact the surface 19 such that the motion of the apparatus 10 displaces the LVDT. In the embodiment depicted, the LVDT may be supported by a post 134 or other fixed structure in order to couple the LVDT to an elevated apparatus 10, such as the gas turbine engine in situ. It should be recognized that the displacement of the apparatus 10 relative to the ground and/or post 134 may be the same as the displacement relative to the actuator pack 108 positioned on the ground. As such, the LVDT may capture the motion of the apparatus 10 relative to the actuator pack 108.

It should be recognized that, in certain embodiments, multiple LVDTs may be included to capture a two-dimensional and/or three-dimensional motion of the apparatus 10 relative to the actuator pack. For instance, one LVDT may be coupled in a vertical orientation (i.e., along a vertical direction V relative a centerline 12) of the apparatus 10. Such a vertically orientated LVDT may be able to sense the relative motion between the apparatus 10 and the actuator pack 108 in the vertical direction V. In the embodiment depicted, one LVDT is coupled to a bottom portion of the apparatus 10 in order to sense vertical displacements, though it should be recognized that the LVDT may be attached anywhere where vertical displacements are translated to the LVDT. Similarly, a transversely oriented (i.e., along a transverse direction T relative to the centerline 12) LVDT may be coupled to the apparatus 10. The LVDT may be attached to the surface 19 at any location where transverse displacements are translated to the LVDT. For example, the LVDT may be coupled to at least one of the sides of the apparatus 10. Further, one LVDT may be coupled in an axial orientation (i.e., along an axial direction A of the centerline 12) to the apparatus 10. The LVDT may be attached at any location where axial displacements are translated to the LVDT. For example, the LVDT may be attached at the forward or aft ends of the apparatus 10 (omitted for clarity). It should be recognized that a combination of LVDTs with orientations in the vertical, transverse, and axial directions V, T, A may allow for sensing data indicative of a three-dimensional motion of the apparatus 10.

Still referring to FIG. 4, the second sensor 130B may be an optical sensor. In the embodiment depicted, the optical sensor may be operable with the surface 19 of the apparatus 10. For example, the optical sensor may be coupled to the surface 19 at an exterior of the apparatus 10, such as at the bottom of the apparatus 10. In the illustrated embodiment, the optical sensor may include an optical receiver 136 and an optical transmitter 138. One of the optical receiver 136 or the optical transmitter 138 may be coupled to the surface 19 of the apparatus 10. For example, in the depicted embodiment, the optical receiver 136 is coupled to the surface 19. Further, the optical transmitter 138 may be positioned in line with the optical receiver 136, as indicated by line 139. For example, the optical transmitter 138 may be positioned directly below the optical receiver 136. Further, the optical transmitter 138 may be fixed relative to the ground and/or the actuator pack 108. At least one of the optical transmitter 138 or the optical receiver 136 may be communicatively coupled to the computer 202, such as via a communicative cable 212 or wirelessly.

The optical receiver 136 and the optical transmitter 138 may be used together to determine the movement of the apparatus 10 relative to the actuator pack 108. In certain embodiments, the optical receiver 136 and optical transmitter 138 may be positioned such that they are approximately in alignment in one direction, such as the vertical direction V relative to the centerline 12 of the apparatus 10. Further, a change in the alignment between the optical receiver 136 and the optical transmitter 138 may correspond to the motion of the apparatus 10 relative to the actuator pack 108. In some embodiments, the optical receiver 136 and optical transmitter 138 may allow for the measurement of displacements of the apparatus 10 in at least two dimensions. For example, in the illustrated embodiment, a vertical orientation of the optical receiver 136 and optical transmitter 138 may allow for measurements of displacements in both the transverse and axial directions T, A relative to the centerline 12. Further, in other embodiments, the optical receiver 136 and optical transmitter 138 may generally allow for measurements of displacements in directions orthogonal to the line 139.

In one embodiment, the optical transmitter 138 may emit light. For example, the optical transmitter 138 may be a laser. In such embodiments, the optical receiver 136 may sense the emitted light, such as the laser. It should be recognized that, in other embodiments, the optical receiver 136 and optical transmitter 138 may be positioned such that optical transmitter 138 is coupled to the surface 19 while the optical receiver is positioned on the ground or the actuator pack 108. The motion of the apparatus 10 relative to the actuator pack 108 may change the orientation of the optical transmitter 138 and the optical receiver 136. Although a single optical receiver 136 is depicted, in certain embodiments, the second sensor 130B may include a plurality of optical receivers 136, such as a grid of optical receivers 136. In such embodiments, the motion of the apparatus 10 may reposition the optical transmitter 138, e.g., the laser beam, between optical receivers 136. For example, the laser beam's passage between optical receivers 136 may be used to determine the relative motion between the apparatus 10 and the actuator pack 108.

It should be recognized that, in other embodiments, the second sensor 130B may be utilized with another sensor 130 in order to determine a displacement in a third dimension, such as vertical motion of the apparatus 10 relative to the actuator pack 108. For example, another optical receiver 136 and optical transmitter 138 may be aligned in the transverse direction T or axial direction A relative to the centerline 12. It should be recognized that any two orientation combinations of the three orientations may allow the system 200 to determine the three-dimensional relative motion between the apparatus 10 and the actuator pack 108. In another embodiment, the optical receiver 136 and optical transmitter 138 may be used with another sensor 130 such as the first sensor 130A, such as the LVDT, oriented in a direction the second sensor 130B is not configured to measure displacements. For example, in the illustrated embodiment, the first sensor 130A oriented in the vertical direction V combined with the optical receiver 136 and optical transmitter 138 aligned in the vertical direction V may allow for the system 200 to determine the three-dimensional motion of the apparatus 10.

It should be appreciated that the system 200 may include only one of the first sensor 130A and/or the second sensor 130B, or any other combination of the first sensor 130A and/or the second sensor 130B. Further, either of the first sensor 130A or the second sensor 130B may have any other suitable configuration. With respect of the second sensor 130B, one of the optical receiver 136 or the optical transmitter 138 may be a transceiver configured to sense reflected light. Further, any other suitable sensor 130 may be used. For example, the sensor 130 may be an acoustic sensor, etc.

Still referring to FIG. 4, in certain embodiments, the probe assembly 103 is in communication with the sensor(s) 130 via the computer 202. The computer 202 may be configured to move the probe 100 of the probe assembly 103 in response to the sensor(s) 130 sensing the data indicative of the relative motion between the apparatus 10 and the probe assembly 103. For example, the system 200 may change an orientation and/or position of the probe 100 and/or actuator pack 108 relative to the apparatus 10 to compensate for the motion of the apparatus 10. In certain embodiments, the computer 202 may receive the signal communicated from the sensor(s) 130 and use the relative motion information to determine an adjustment to the orientation and/or the position of the probe 100 or the actuator pack 108. For example, the computer 202 may communicate a signal to the probe actuator(s) 116 to adjust the position and/or orientation of the probe 100 and/or the second end 104 of the probe 100. Such an adjustment may compensate for the relative motion between the apparatus 10 and the actuator pack 108.

In the illustrated embodiment, the actuator pack 108 may include the translational motor 112 (as briefly described in reference to FIG. 2). The translational motor 112 may be configured to change the orientation and/or the position of the actuator pack 108 relative to the apparatus 10. Further, the computer 202 may be configured to move the probe 100 using the translational motor 112 in response to the sensor 130 sensing the data indicative of the relative motion. For instance, the translational motor 112 may move the actuator pack 108 such that the actuator pack 108 tracks the motion of the apparatus 10. In the illustrated embodiment, the translational motor 112 is drivingly coupled to one or more translational actuators 140. For example, the translational actuator(s) 140 may be a roller or a wheel. In certain embodiments, the actuator pack 108 may include four translational actuators 140 positioned at four corners of the actuator pack 108 to support the actuator pack 108 from the ground.

In the depicted embodiment, the translational motor 112 may drive the translational actuator(s) 140 to move the actuator pack 108. For instance, the translational motor 112 may drive the translational actuator(s) 140 to move the actuator pack 108 in the transverse direction T or axial direction A relative to the centerline 12 to track the motion of the apparatus 10. Further, the translational motor 112 may extend and/or retract the translational actuator(s) 140 in the vertical direction V to adjust a height of the actuator pack 108. For instance, in certain embodiments, the translational motor 112 may extend the translational actuator(s) 140 in order to raise the actuator pack 108 in the vertical direction V to track a vertically upward displacement of the apparatus 10. Similarly, the translational motor 112 may retract the translational actuator(s) 140 in order to lower the actuator pack 108 in the vertical direction V to track a vertical downward displacement of the apparatus 10.

It should be recognized that, in other embodiments, the translational actuator(s) 140 may be any structure that repositions the actuator pack 108 in at least one of the axial, transverse, or vertical directions A, T, V relative to the centerline 12. For instance, in some embodiments, the translational actuator(s) 140 may be a track system coupled to the actuator pack 108 allowing displacements of the actuator pack 108 in at least one direction. Further, it should be understood that moving the actuator pack 108 to track the relative motion of the apparatus 10 may improve inspection or repair procedures performed on the apparatus 10. For example, an actuator pack 108 that mirrors the motion of the apparatus 10 may reduce or prevent jarring or shifting of the probe 100 inserted within the apparatus 10.

In certain embodiment, the translational actuator(s) 140 may further adjust an orientation of the actuator pack 108 along any of the axial, transverse, or vertical directions A, T, V. For example, the translational actuator(s) 140 may rotate the actuator pack 108 along one or more axes extending in the axial, transverse, or vertical direction A, T, V. Further, the translational actuator(s) 140 may be in any configuration that allows adjustment of the position and/or orientation of the actuator pack 108. It should be recognized that the actuator pack 108 and/or the translational actuator(s) 140 need not be aligned with the axial, transverse, and/or vertical directions A, T, V. For instance, the computer 202 may translate the movement of the apparatus 10 in the axial, transverse, and/or vertical direction A, T, V into a local coordinate system defined relative to the actuator pack 108. As such, one or more adjustments to the position and/or orientation of the actuator pack 108 in the local coordinate system may be required to adjust the position and/or orientation of the actuator pack 108 in the axial, transverse, and/or vertical directions A, T, V.

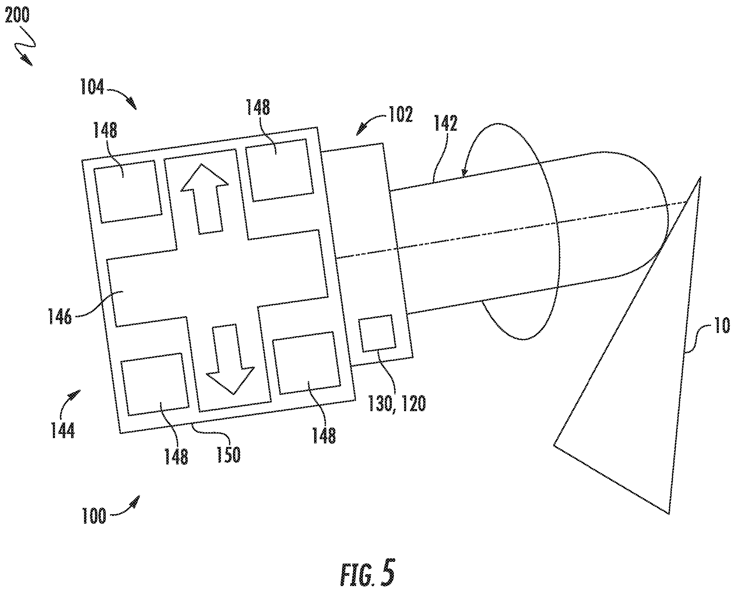

Referring now to FIG. 5, another embodiment of a system 200 for compensating for the relative motion between the probe 100 and apparatus 10 is illustrated according to aspects of the present disclosure. The system 200 may be configured in substantially the same manner as the exemplary system 200 described above with respect to FIG. 2-4. For example, the system 200 may include the probe 100, the computer 202, and the actuator pack 108. However, in the illustrated embodiment, the probe 100 may include a tool 142 positioned at the second end 104 of the probe 100. More particularly, the system 200 of FIG. 5 may compensate for a working motion of the probe 100 relative to the apparatus 10. It should be recognized that in the illustrated embodiment the probe 100 may be inserted in an access port 62 of the apparatus 10, such as any of the access ports 62 as described in reference to FIG. 1. In certain embodiments, the tool 142 may be an oscillating or rotary tool. For instance, the tool 142 may be a drill, a grinder, etc. In such a manner, the tool 142 may oscillate or rotate to remove carbon buildup on components of the apparatus 10 or may grind off other undesirable materials. In some embodiments, the rotation and/or oscillation of the tool 142 may approximately be represented by a tool frequency and a tool amplitude.

In the depicted embodiment, the system 200 includes the sensor 130 configured to sense data indicative of a working motion of the probe assembly 103 as a result of an operation of the tool 142. For example, the sensor 130 may detect an actual vibration of the probe assembly 103 relative to the apparatus 10. The actual vibration may be the vibration at the second end 104 caused by the rotation and/or oscillation of the tool 142. Further, the sensor 130 may detect the tool frequency and/or the tool amplitude of the vibration of the tool 142. It should be recognized that, in certain embodiments, the sensor 130 may be attached at the second end 104 of the probe 100. For example, the sensor 130 may be one of the sensors 120 contained in the probe housing 102 as described in reference to FIG. 2. Further, in certain embodiments, the sensor 130 may be an accelerometer. In another embodiment, the sensor 130 may be an optical sensor as described in regards to FIG. 2. For example, the sensor 130 may be used for both inspection purposes and to determine the relative motion between the probe 100 and the apparatus 10. As such, the computer 202 may process images captured by the sensor 130 and determine the relative motion between the probe 100 and the apparatus 10. Still, in further embodiments, the sensor 130 may be any sensor that may detect the working motion of the probe 100 relative to the apparatus 10. Additionally, the sensor 130 may communicate the working motion (e.g., the actual vibration, the tool frequency, and/or tool amplitude) to the computer 202, such as through the cable 111 of the probe 100, or by a wireless communication bus.

In the depicted embodiment, the probe assembly 103 may be in communication with the sensor 130 (such as via the computer 202). Further, the computer 202 may be configured to move the probe 100 of the probe assembly 103 in response to the sensor 130 sensing the data indicative of the working motion of the probe assembly 103. In the depicted embodiment, the system 200 includes a damping device 144 configured to apply a contra-acting vibration to the second end 104 of the probe 100 to reduce the actual vibration of the probe 100. In certain embodiments, the damping device 144 may be a solenoid housed at the second end 104 of the probe 100. The solenoid may include a core mass 146 and a coil 148. The coil 148 may surround the core mass 146. For example, the coil 146 may wrap around the core mass 146 at approximately a solenoid housing 150. Further, an electric current may be passed through the coil 148. The core mass 146 may contain a ferrous material, such that the electric current passed through the coil 148 displaces the core mass 146. In the depicted embodiment, the current passing through the coil 148 oscillates the core mass 146 at a contra-acting vibration to reduce the vibration of the probe 100 relative to the apparatus 10. For example, the computer 202 may communicate a signal, such as an electric current, to the damping device 144 causing the core mass 146 to oscillate at approximately the same frequency and amplitude as the tool frequency and tool amplitude.

In certain embodiments, the computer 202 may communicate a signal to oscillate the core mass 146 with a phase shift of about 180 degrees from the tool frequency. Oscillating the core mass 146 with the phase shift and at approximately the same frequency and amplitude as the tool 142 may cause destructive interference between the vibration of the core mass 146 and the vibration of the tool 142. In certain embodiments, the destructive interference may reduce and/or eliminate the actual vibration of the probe 100 relative to the apparatus 10.

It should be recognized that the system 200 may include any combination of the components of FIGS. 4 and 5. For example, the system 200 may include the sensor 130A, 130B external to the apparatus 10, as shown in FIG. 4, as well as the sensor 130 at the second end 104 of the probe 130 as shown in FIG. 5. Further, the system may include the actuator pack 108 and associated actuators as well as the damping device 144 to compensate for the relative motion between the apparatus 10 and the actuator pack 108 and/or the probe 100. For example, the actuator pack 108 may compensate for a relatively larger motion between the apparatus 10 and the probe 100 and/or actuator pack 108. Similarly, the damping device 144, such as the solenoid of FIG.5, may compensate for a relatively smaller motion between the apparatus 10 and the probe 100, such as the actual vibration of the probe.

Referring now to FIG. 6, a method (300) of compensating for the relative motion between the probe of the probe assembly and the apparatus is depicted according to aspects of the present disclosure. It should be recognized that the method (300) may be utilized with embodiments of the system 200 described in regards to FIGS. 2-5 or any other capable system. As such, the probe assembly may further include the actuator pack. Further, the method (300) may be used with any apparatus, such as, but not limited to, the gas turbine engine of FIG. 1. Further, the method (300) may be utilized with a gas turbine engine in situ (see e.g., FIG. 4).

The method (300) includes at (302) inserting a probe into an apparatus. In certain embodiments, as shown at (304), the apparatus may be a gas turbine engine (such as the gas turbine engine of FIG. 1). Further, as shown at (306) inserting the probe into the apparatus may include repairing a component of the gas turbine engine in situ. It should be recognized that performing various procedures on and/or within the gas turbine engine in situ may reduce the costs of the procedures, the complexity of the procedures, and the gas turbine engine downtime. Still in other embodiments, the gas turbine engine may be off-wing and may also be partially or fully disassembled.

At (308), the method (300) includes sensing data indicative of the relative motion between the apparatus and at least one of the probe or an actuator pack using a sensor. In certain embodiments, as shown at (312) the sensor is a LVDT (as described in reference to FIG. 4) operable with a surface of the apparatus. Further, in such embodiments, sensing data indicative of the relative motion between the apparatus and at least one of the probe or the actuator pack using the sensor includes sensing data indicative of a displacement of the LVDT. In a further embodiments, as shown at (314), the sensor is an optical sensor operable with the surface of the apparatus. In such an embodiment, sensing data indicative of the relative motion between the apparatus and at least one of the probe or the actuator pack includes sensing data indicative of a change in an alignment of an optical transmitter of the optical sensor and an optical receiver of the optical sensor. At (310), in a still further embodiment, sensing data indicative of the relative motion between the apparatus and at least one of the probe or the actuator pack includes sensing data indicative of an actual vibration of the probe.

At (316), the method (300) includes moving the probe relative to the apparatus in response to the sensed data indicative of the relative motion between the apparatus and at least one of the probe or the actuator pack. In one embodiment, as shown at (318), moving the probe relative to the apparatus includes moving the probe relative to the apparatus using a translational motor to move the actuator pack, as described in regards to FIG. 4. In another embodiment, as shown at (320) moving the probe relative to the apparatus includes applying a contra-acting vibration to a second end of the probe to reduce the actual vibration of the probe, as described in regards to FIG. 5.

This written description uses exemplary embodiments to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects of the disclosure are provided by the subject matter of the following clauses:
Clause 1. A system for compensating for a relative motion between a probe and an apparatus, the system comprising:
   a probe assembly comprising an actuator pack positioned exterior to the apparatus and a probe insertable into the apparatus, the probe comprising a first end coupled to the actuator pack, a second end, and an elongated body extending therebetween;
   a sensor configured to sense data indicative of a relative motion between the apparatus and the probe assembly; and
      a computer operably coupled with the sensor and the probe assembly, the computer configured to move the probe of the probe assembly in response to the sensor sensing the data indicative of the relative motion between the apparatus and the probe assembly.
Clause 2. The system of clause 1, wherein the apparatus comprises a surface, wherein the sensor is a linear variable differential transformer operable with the surface of the apparatus.
Clause 3. The system of clause 1, wherein the apparatus comprises a surface, wherein the sensor is an optical sensor operable with the surface of the apparatus.
Clause 4. The system of clause 3, wherein the optical sensor comprises an optical receiver and an optical transmitter, wherein one of the optical receiver or the optical transmitter is coupled to the surface of the apparatus.
Clause 5. The system of clause 1, wherein the actuator pack further comprises:
   a translational motor configured to change an orientation of the actuator pack relative to the apparatus in response to the sensor sensing the data indicative of the relative motion.
Clause 6. The system of clause 1, wherein the sensor is an accelerometer.
Clause 7. The system of clause 1, wherein the apparatus is a gas turbine engine.
Clause 8. The system of clause 1, wherein the probe is a snake probe, and wherein the elongated body of the snake probe comprises a plurality of segments moveable relative to one another by the actuator pack.
Clause 9. A method of compensating for a relative motion between a probe of a probe assembly and an apparatus, wherein the probe assembly further includes an actuator pack, the method comprising:
   inserting the probe into an apparatus;
   sensing data indicative of a relative motion between the apparatus and at least one of the probe or an actuator pack using a sensor; and
   moving the probe relative to the apparatus in response to the sensed data indicative of the relative motion between the apparatus and at least one of the probe or the actuator pack.
Clause 10. The method of clause 9, wherein the apparatus is a gas turbine engine.
Clause 11. The method of clause 10, wherein inserting the probe into the apparatus comprises repairing a component of the gas turbine engine in situ.
Clause 12. The method of clause 9, wherein moving the probe relative to the apparatus includes moving the probe relative to the apparatus using a translational motor to move the actuator pack.
Clause 13. The method of clause 9, wherein sensing data indicative of the relative motion between the apparatus and at least one of the probe or the actuator pack comprises sensing data indicative of an actual vibration of the probe.
Clause 14. The method of clause 13, wherein moving the probe relative to the apparatus comprises applying a contra-acting vibration to the second end of the probe to reduce the actual vibration of the probe.
Clause 15. The method of clause 9, wherein the sensor is a linear variable differential transformer operable with a surface of the apparatus, and wherein sensing data indicative of the relative motion between the apparatus and at least one of the probe or the actuator pack using the sensor includes sensing data indicative of a displacement of the linear variable differential transformer.
Clause 16. The method of clause 9, wherein the sensor is an optical sensor operable with a surface of the apparatus, and wherein sensing data indicative of the relative motion between the apparatus and at least one of the probe or the actuator pack includes sensing data indicative of a change in an alignment of an optical transmitter of the optical sensor and an optical receiver of the optical sensor.
Clause 17. A system for compensating for a relative motion between a probe and an apparatus, the system comprising:
   a probe assembly comprising an actuator pack positioned exterior to the apparatus and a probe insertable into the apparatus, the probe comprising a first end coupled to the actuator pack, a second end having a tool, and an elongated body extending therebetween;
   a sensor configured to sense data indicative of a working motion of the probe assembly as a result of an operation of the tool; and
   a computer operable with the probe assembly and the sensor, the computer configured to move the probe of the probe assembly in response to the sensor sensing the data indicative of the working motion of the probe assembly.
Clause 18. The system of clause 17, wherein the tool is an oscillation tool.
Clause 19. The system of clause 17, wherein the sensor is attached at the second end of the probe, and wherein the working motion of the probe assembly is an actual vibration of the probe assembly relative to the apparatus.
Clause 20. The system of clause 19, the system further comprising:
   a damping device configured to apply a contra-acting vibration to the second end of the probe to reduce the actual vibration of the probe.

## Claims

1. A system for compensating for a working motion between a probe and a working surface, the system comprising:
a probe assembly (200) having a probe (100) with an operating condition;
a sensor (130) associated with the probe (100) to sense a working motion of the probe (100) during the operating condition; and
a computer (202) in communication with the sensor (130) and the probe assembly (200), the computer (202) causing the probe assembly (200) to generate a movement to counter the working motion during the operating condition.

2. The system of claim 1, wherein the movement to counter the working motion during the operating condition includes applying a contra-acting vibration to an end (104) of the probe (100) to reduce the working motion.

3. The system of claim 1, wherein the probe assembly (200) includes a tool (142) that generates the working motion during the operating condition.

4. The system of claim 3, wherein the working motion of the tool (142) is represented by a tool frequency and a tool amplitude.

5. The system of claim 4, wherein the tool oscillates or rotates.

6. The system of claim 5, wherein the sensor (130) communicates the tool frequency and the tool amplitude to the computer (202).

7. The system of claim 6, wherein the computer (202) causes the movement to be at the tool frequency and the tool amplitude.

8. The system of claim 7, wherein the computer (202) causes the movement to counter the working motion to include a phase shift of about 180 degrees from the tool frequency.

9. The system of claim 1, wherein the probe assembly (200) includes the sensor (130).

10. The system of claim 1, wherein the movement to counter the working motion is generated by a dampener (144).

11. The system of claim 10, wherein the dampener (144) is at the probe assembly (200).

12. The system of claim 11, wherein the dampener (144) includes a solenoid (146, 148).

13. The system of claim 10, further comprises an actuator pack (108) and an elongated body (101) extending between the actuator pack (108) and the probe assembly (200).

14. The system of claim 13, wherein the actuator pack (108) compensates for a first motion between the probe (100) and the actuator pack (108), the dampener (144) compensates for a second motion between the probe (100) and the working surface, and the first motion being larger than the second motion.

15. The system of claim 14, wherein the second motion is the working motion.
